(19) Europäisches Patentamt / European Patent Office / Office européen des brevets

(11) **EP 3 495 521 A1**

(12) **DEMANDE DE BREVET EUROPEEN**

(43) Date de publication:
**12.06.2019 Bulletin 2019/24**

(51) Int Cl.:
***C22C 32/00*** *(2006.01)* ***C22C 9/02*** *(2006.01)*
***B22F 1/00*** *(2006.01)* ***C03B 35/00*** *(2006.01)*
***C22C 1/04*** *(2006.01)*

(21) Numéro de dépôt: **18209622.2**

(22) Date de dépôt: **30.11.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.12.2017 FR 1761715**

(71) Demandeur: **Commissariat à l'Energie Atomique et aux Energies Alternatives 75015 Paris (FR)**

(72) Inventeurs:
• **DELLEA, Olivier**
  **38054 Grenoble Cedex 09 (FR)**
• **JOUHANNAUD, Julien**
  **38054 Grenoble Cedex 09 (FR)**
• **PONCELET, Olivier**
  **38054 Grenoble Cedex 09 (FR)**
• **SKRZYPSKI, Jonathan**
  **38054 Grenoble Cedex 09 (FR)**

(74) Mandataire: **Nony 11 rue Saint-Georges 75009 Paris (FR)**

(54) **MATÉRIAU COMPOSITE**

(57) La présente invention concerne un matériau composite adapté pour une mise en contact avec un ou des objet(s) ayant une température supérieure ou égale à 250°C, notamment à des fins de préhension et/ou façonnage, caractérisé en ce qu'il est formé à partir de particules de bronze, de téflon et d'au moins un carbonate d'alcalino-terreux et/ou au moins un carbonate de terres rares.

Elle concerne également un procédé de fabrication d'un tel matériau composite, un article moulé caractérisé en ce qu'il est formé, en tout ou partie, d'un matériau composite et un outil pour la préhension ou la manutention d'un objet ayant une température supérieure ou égale à 250°C, ledit outil comportant un matériau composite ou un article moulé selon l'invention.

EP 3 495 521 A1

**Description**

La présente invention concerne la manutention d'objets formés à chaud, et plus particulièrement la manipulation de la verrerie à chaud et vise notamment à proposer un nouveau matériau composite efficace pour la préhension et/ou le façonnage d'objets à haute température.

Dans la fabrication de la verrerie par des procédé automatiques, le verre fondu est mis en forme sur des chaines de production fonctionnant en continu et les articles verriers ainsi formés sont distribués, alors qu'ils sont encore à température très élevée. Sur leur trajet de distribution, des pinces saisissent les pièces de verre chaudes (400°C-800°C) et les déposent sur les convoyeurs. Ces pinces sont en acier mais leur zone de contact avec le verre est classiquement réalisée en un matériau distinct. Le matériau constitutif de cette zone de contact doit en effet être souple pour amortir la réception de la pièce (jusqu'à 800g). ne pas marquer cette pièce qui est encore « molle ». Il doit également posséder une résistance mécanique suffisante pour supporter la cadence (6 pièces minute voire plus) et résister plusieurs jours sans se déformer.

Conventionnellement, les matériaux constitutifs de ces zones de contact sont réalisés à partir d'aux moins deux composants inertes bien sûr vis-à-vis du verre chaud qui est un matériau chimiquement très agressif, à savoir un composant qui joue le rôle d'amortisseur à l'image du téflon et d'une polyimide, et un matériau conducteur thermique à l'image du graphite et du bronze, qui joue le rôle d'accumulateur de chaleur pour prévenir une dégradation prématurée du composant organique associé.

Bien entendu, le choix de ces matériaux constitutifs des zones de contact avec le verre chaud impacte directement la productivité d'une verrerie industrielle. En Europe, on privilégie les systèmes Bronze/téflon qui sont nettement moins chers que les systèmes graphite/polyimide.

Toutefois, les systèmes Bronze/téflon ont pour inconvénient de poser à terme un problème sanitaire dans la mesure où, à l'usage, ils génèrent des vapeurs toxiques lorsqu'ils sont chauffés à haute température. La décomposition thermique du téflon qui finit par se produire, génère des composés volatiles fluorés ($CH_2F$, $CF_2$, $HF$,..). Or, il est difficile d'assurer la sécurité du personnel intervenant sur les chaînes de production, par ventilation et/ou un capotage car les opérateurs doivent régler les carrousels en permanence et doivent avoir un accès direct aux pièces chaudes. La température de l'atelier dépasse les 40°C.

La présente invention a précisément pour objet de proposer un nouveau matériau composite dénué de cet effet indésirable tout en étant doté des autres performances attendues.

Ainsi, selon un premier objet, la présente invention concerne un matériau composite adapté pour une mise en contact avec un ou des objet(s) ayant une température supérieure ou égale à 250°C, caractérisé en ce qu'il est formé à partir de :

(i) de particules de bronze,
(ii) de téflon, et
(iii) d'au moins un carbonate d'alcalino-terreux et/ou au moins un carbonate de terres rares.

Un tel matériau composite est notamment dédié à la préhension et/ou au façonnage des objets ayant une température supérieure ou égale à 250°C.

De manière inattendue, les inventeurs ont en effet constaté qu'un matériau composite selon l'invention, lorsqu'il est chauffé à une température suffisante pour entrainer la décomposition du téflon, génère moins, voire aucun, composé volatile fluoré toxique, comparativement à un matériau composite formé de bronze et de téflon et dépourvu d'au moins un carbonate d'alcalino-terreux et/ou au moins un carbonate de terres rares conformément à la présente invention.

Il est également observé une diminution du fluage à chaud dudit matériau composite, i.e. de la fusion-décomposition du téflon, voire une disparition du fluage à chaud dudit matériau composite, lui conférant ainsi une durée de vie nettement supérieure.

Les matériaux composites selon l'invention s'avèrent donc particulièrement utiles dans des domaines tels que l'industrie verrière.

Un matériau composite selon l'invention peut avantageusement être caractérisé en ce qu'il se présente sous la forme d'un article moulé.

Ainsi, un autre objet de la présente invention concerne un produit ou un article moulé caractérisé en ce qu'il est formé, en tout ou partie, de préférence en ce qu'il est constitué, i.e. est uniquement composé, d'un matériau composite selon l'invention.

Un autre objet de la présente invention est un procédé de fabrication d'un matériau composite selon l'invention.

Un tel procédé selon l'invention comporte les étapes suivantes :

a) disposer d'un mélange :

- de particules de bronze,
- de téflon, et
- d'au moins un carbonate d'alcalino-terreux et/ou au moins un carbonate de terres rares ; et

b) imposer audit mélange une pression supérieure ou égale à 100 MPa de manière à former ledit matériau composite.

Selon un mode de réalisation particulier, l'étape b) du procédé selon l'invention est réalisée à une température comprise entre 100°C et 300°C, en particulier entre 100°C et 200°C, et est de préférence de 150°C.

Selon un mode de réalisation, l'étape b) d'un procédé de fabrication selon l'invention est réalisée au sein d'un moule propice à l'obtention d'un matériau composite selon l'invention sous la forme d'un article moulé.

Enfin, un autre aspect de la présente invention concerne un outil, de préférence une pince, pour la préhension ou la manutention d'un objet, notamment un objet ayant une température supérieure ou égale à 250°C, ledit outil comportant au moins un mors de préhension, ledit mors de préhension :

(i) étant constitué d'un matériau composite selon l'invention ; ou
(ii) comportant au moins un article moulé, ledit au moins un article moulé étant disposé dans l'outil de sorte à entrer en contact avec l'objet à manipuler. Cet objet est préférentiellement un objet en verre.

Comme il ressort du présent texte, et notamment des exemples ci-après, les matériaux composites selon l'invention, ainsi que les articles moulés ou produits obtenus à partir de ces matériaux composites selon l'invention, s'avèrent avantageux à plusieurs titres.

Ils sont résistants à la corrosion et à l'oxydation.

Ils sont aptes à la préhension, et par conséquent à la mise en contact, d'objets, notamment d'objets en verre, ayant une température de l'ordre de 400°C à 500°C, pendant trois à sept secondes entre la phase de chargement et de déchargement dudit objet, sans le dégrader.

Comme indiqué précédemment, les matériaux composites et articles moulés ou produits selon l'invention s'avèrent en effet avoir des performances accrues dans leur durée de vie du fait d'une résistance à l'usure améliorée par rapport à d'autres matériaux composites habituellement utilisés ou à des articles moulés ou produits préparés à partir de ces autres matériaux composites habituellement utilisés.

Ils présentent également l'avantage d'être moins dangereux, voire sans danger, sur le plan sanitaire en ce qu'ils dégazent peu, voire en ce qu'ils ne dégazent pas, d'espèce nocive à haute température, comme c'est le cas pour certains matériaux composites actuellement utilisés comprenant du téflon, et différents de la présente invention.

Ils présentent par ailleurs une bonne résistance aux chocs mécaniques, lors par exemple de la réception d'objets à haute température mentionnés ci-dessus au niveau des convoyeurs destinés à les distribuer à une vitesse de plusieurs mètres par seconde vers les zones de finition et de stockage dans les chaines de production.

En outre, dans le cadre d'une utilisation dans la fabrication d'articles de verre, il est constaté une minimisation du choc thermique de refroidissement imposé au verre durant leur mise en contact avec des produits ou articles moulés selon l'invention présents sous forme d'inserts au niveau des pinces destinées à saisir les articles chauds. Comme la température de l'insert formé d'un matériau composite selon l'invention est plus faible que celle du verre, la baisse de température de la surface du verre liée au contact brutal avec l'insert entraine l'apparition d'un gradient thermique induisant un profil de contrainte. Les contraintes de tension à la surface du verre sont une source de microfissures.

L'ensemble de ces avantages permettent avantageusement de répondre à des problématiques thermo-tribo-mécaniques et chimiques (stress oxydant du verre) des inserts de roue de transfert rencontrées par l'homme du métier.

Matériau composite selon l'invention

Comme énoncé précédemment le matériau composite selon l'invention est formé à partir :

- de particules de bronze,
- de téflon, et
- d'au moins un carbonate d'alcalino-terreux et/ou au moins un carbonate de terres rares.

Selon un mode de réalisation préféré, un matériau composite selon l'invention est formé à plus de 90% en masse, notamment à plus de 95% en masse, en particulier à plus de 98% en masse, plus particulièrement à plus de 99% en masse, par rapport à la masse totale du matériau composite, voire est constitué, i.e. uniquement composé :

- de particules de bronze,
- de téflon, et

- d'au moins un carbonate d'alcalino-terreux et/ou au moins un carbonate de terres rares.

Les propriétés de conductivité thermique d'un matériau composite selon l'invention peuvent notamment être modulées via la quantité de particules de bronze le constituant.

Selon un mode de réalisation, un matériau composite selon l'invention possède une conductivité thermique comprise entre 3 et 10 $W.m^{-1}.K^{-1}$, et de préférence comprise entre 4 et 5 $W.m^{-1}.K^{-1}$.

La conductivité thermique $\lambda$ (ou TC) donne la capacité d'un matériau à dissiper la chaleur. La loi de Fourier dans un solide s'écrit :

$$\vec{\varphi} = -\lambda \cdot \overrightarrow{gradT}$$

le flux de chaleur $\varphi$ étant proportionnel à la conductivité thermique $\lambda$ et au gradient de température. L'unité de la conductivité thermique est, comme indiqué ci-dessus, le $W.m^{-1}.K^{-1}$.

La conductivité thermique d'un matériau selon l'invention peut être mesurée selon différents principes bien connus de l'homme du métier. En effet, de nombreux principes de mesure de conductivité thermique existent, que l'on peut classer dans deux catégories : les méthodes en régime permanent (dont celle dite de « plaque chaude gardée », selon la norme ISO 8302) et les méthodes en régime transitoire où l'analyse dynamique d'une montée en température provoquée par un élément chauffant permet de calculer la diffusivité thermique, la capacité thermique massique et la conductivité thermique.

Ce matériau composite est adapté à une mise en contact avec des objets possédant une température très élevée. Il est donc également thermorésistant.

Avantageusement, il se présente sous la forme d'un objet moulé.

Pour se faire, il est avantageusement formé par compression thermique de l'ensemble de ces constituants au sein d'un moule façonné aux dimensions et forme de l'article recherché par exemple comme un insert d'un mors de préhension.

Particules de bronze

Les particules de bronze constituent l'un des composants obligatoires d'un matériau composite de l'invention. Elles contribuent à la conductivité thermique du matériau composite selon l'invention.

Selon un mode de réalisation, ces particules sont notamment présentes dans le matériau composite en une teneur d'au moins 60% en masse par rapport à la masse totale du matériau composite.

En particulier, ces particules sont notamment présentes dans le matériau composite en une teneur comprise entre 60% et 80% en masse par rapport à la masse totale du matériau composite. Selon un mode de réalisation particulier, ces particules peuvent être présentes dans le matériau composite en une teneur comprise entre 65% et 75% en masse par rapport à la masse totale du matériau composite.

Selon un mode de réalisation, les particules de bronze mises en oeuvre pour la préparation d'un matériau composite selon l'invention ont un diamètre compris entre 10 et 100 micromètres, de préférence entre 20 et 50 micromètres, plus particulièrement entre 30 et 40 micromètres.

Selon la pression et la température imposée lors de la fabrication d'un matériau composite selon l'invention, le diamètre des particules de bronze dans un matériau composite selon l'invention est en particulier compris entre 10 et 100 micromètres, de préférence entre 20 et 50 micromètres, plus particulièrement entre 30 et 40 micromètres.

Selon la présente invention, on entend par « diamètre » des particules la dimension la plus grande mesurée sur une section transversale de la particule.

A titre illustratif, des particules de bronze présentent dans le commerce qui peuvent être utilisées dans un matériau composite de l'invention sont celles commercialisées par la société ECKA Granules.

Téflon

Le téflon constitue l'un des autres composants obligatoires d'un matériau composite de l'invention. Il intervient afin de conférer ses propriétés d'amortissement au matériau composite selon l'invention.

Le Téflon est la marque désignant le polytétrafluoroéthylène (PTFE) passée désormais dans le langage courant.

Selon un mode de réalisation, un matériau composite de l'invention comprend une teneur en téflon d'au moins 20% en masse par rapport à la masse totale du matériau composite.

En particulier, le téflon est notamment présent dans le matériau composite selon l'invention en une teneur comprise entre 20% et 40% en masse par rapport à la masse totale du matériau composite.

Selon un mode de réalisation préféré, un matériau composite de l'invention comprend un ratio massique particules de bronze/téflon est compris entre 60/30 et 80/20.

A titre illustratif, du téflon présent dans le commerce qui peut être utilisée dans un matériau composite selon l'invention est commercialisé par la société PTFE Goodfellow.

Carbonates d'alcalino-terreux et carbonates de terres rares

Le troisième et dernier composant obligatoire d'un matériau composite de l'invention est au moins un carbonate d'alcalino-terreux et/ou au moins un carbonate de terres rares.

Le ou les carbonate(s) d'alcalino-terreux et/ou carbonate(s) de terres rares de l'invention réagissent avec les espèces fluorées émises lors de la décomposition thermique du téflon pour former, respectivement, un fluorure d'alcalino-terreux ou un fluorure de terres rares, permettant ainsi de prévenir l'émission d'espèces volatiles fluorées toxiques par un matériau composite comprenant du téflon.

Un carbonate d'alcalino-terreux composant un matériau composite selon l'invention peut être choisi dans le groupe constitué de $BeCO_3$, $MgCO_3$, $CaCO_3$, $SrCO_3$, $BaCO_3$, $RaCO_3$ et leurs mélanges. En particulier, un carbonate d'alcalino-terreux peut être choisi dans le groupe constitué de $CaCO_3$, $SrCO_3$, $BaCO_3$ et leurs mélanges. De préférence, un carbonate d'alcalino-terreux est $CaCO_3$.

Il peut notamment s'agir de carbonate de calcium précipité commercialisé par la société Mineral Technologies.

Un carbonate de terres rares peut être choisi dans le groupe constitué de $ScCO_3$, $YCO_3$, $LaCO_3$, $CeCO_3$, $PrCO_3$, $NdCO_3$, $PmCO_3$, $SmCO_3$, $EuCO_3$, $GdCO_3$, $TbCO_3$, $DyCO_3$, $HoCO_3$, $ErCO_3$, $TmCO_3$, $YbCO_3$, $LuCO_3$ et leurs mélanges. De préférence, un carbonate de terres rares est $LaCO_3$ ou $CeCO_3$.

Selon un mode de réalisation, un matériau composite selon l'invention comprend au moins un carbonate d'alcalino-terreux, en particulier comprend un carbonate d'alcalino-terreux, de préférence un carbonate de calcium ($CaCO_3$), un carbonate de strontium ($SrCO_3$) ou un carbonate de baryum ($BaCO_3$), plus préférentiellement un carbonate de calcium.

Selon un mode de réalisation, un matériau composite selon l'invention comprend au moins un carbonate d'alcalino-terreux et ne comprend pas de carbonate de terres rares.

Selon un mode de réalisation, un matériau composite selon l'invention comprend un, deux ou trois carbonates d'alcalino-terreux, et de préférence ne comprend pas de carbonate de terres rares.

Selon un mode de réalisation, un matériau composite selon l'invention comprend au moins un carbonate de terres rares, en particulier comprend un carbonate de terres rares, de préférence $LaCO_3$ ou $CeCO_3$.

Selon un mode de réalisation, un matériau composite selon l'invention comprend au moins un carbonate de terres rares et ne comprend pas de carbonate d'alcalino-terreux.

Selon un mode de réalisation, un matériau composite selon l'invention comprend un, deux ou trois carbonates de terres rares, et de préférence ne comprend pas de carbonate d' alcalino-terreux.

Selon un mode de réalisation, un matériau composite selon l'invention comprend au moins un carbonate d'alcalino-terreux et au moins un carbonate de terres rares.

Selon un mode de réalisation, un matériau composite de l'invention comprend une teneur totale en carbonate d'alcalino-terreux et/ou carbonate de terres rares d'au moins 1% en masse par rapport à la masse totale du matériau composite.

En particulier, le ou les carbonate(s) d'alcalino-terreux et/ou carbonate(s) de terres rares est(sont) notamment présent(s) dans le matériau composite selon l'invention en une teneur totale comprise entre 1% et 10% en masse, notamment entre 2% et 10% en masse, par rapport à la masse totale du matériau composite.

Ainsi, selon un mode de réalisation particulier, un matériau composite de l'invention comprend une teneur totale en carbonate d'alcalino-terreux et/ou carbonate de terres rares comprise entre 5% et 10% en masse, plus particulièrement comprise entre 7% et 10% en masse, par rapport à la masse totale du matériau composite. En particulier, un matériau composite de l'invention peut comprendre une teneur totale en carbonate d'alcalino-terreux et/ou carbonate de terres rares de 7% en masse, par rapport à la masse totale du matériau composite.

Les inventeurs ont plus particulièrement déterminé qu'une teneur en carbonate d'alcalino-terreux et/ou au moins un carbonate de terres rares telle que définie ci-dessus, comme illustré dans les exemples, permet avantageusement d'obtenir un matériau composite selon l'invention conciliant à la fois une bonne conductivité thermique et un piégeage optimal des produits volatils fluorés toxiques lorsque ledit matériau composite est chauffée, comme par exemple lorsqu'il rentre en contact avec un objet ayant une température supérieure ou égale à 250°C, notamment un objet en verre, tel que précédemment mentionné.

Selon un mode de réalisation préféré, un matériau composite de l'invention comprend une teneur totale en carbonate d'alcalino-terreux et/ou carbonate de terres rares de 7% en masse, par rapport à la masse totale du matériau composite.

Comme énoncé précédemment d'autres composés peuvent être également considérés conjointement. D'une manière générale, ce ou ces composés peuvent être choisis parmi les additifs usuellement considérés dans les matériaux composites déjà disponibles pour l'usage considéré selon l'invention. A titre illustratifs, un tel additif peut de préférence être du polyméthacrylate de méthyle (PMMA).

Toutefois, selon un mode de réalisation particulier, un matériau composite de l'invention est formé à plus de 90% en masse, notamment à plus de 95% en masse, en particulier à plus de 98% en masse, plus particulièrement à plus de 99% en masse, par rapport à la masse totale du matériau composite, voire est constitué :

- de particules de bronze,
- de téflon, et
- d'au moins un carbonate d'alcalino-terreux et/ou au moins un carbonate de terres rares.

Selon un mode de réalisation particulier, un matériau composite de l'invention consiste en :

- 2% en masse d'au moins un carbonate d'alcalino-terreux et/ou au moins un carbonate de terres rares par rapport à la masse totale du matériau composite ;
- 68% en masse de particules de bronze ; et
- 30% en masse de téflon,

par rapport à la masse totale du matériau composite.

Selon un mode de réalisation particulier, un matériau composite de l'invention consiste en :

- 2% en masse d'au moins un carbonate d'alcalino-terreux et/ou au moins un carbonate de terres rares par rapport à la masse totale du matériau composite ;
- 78% en masse de particules de bronze ; et
- 20% en masse de téflon,

par rapport à la masse totale du matériau composite.

Selon un mode de réalisation particulier, un matériau composite de l'invention consiste en :

- 5% en masse d'au moins un carbonate d'alcalino-terreux et/ou au moins un carbonate de terres rares par rapport à la masse totale du matériau composite ;
- 65% en masse de particules de bronze ; et
- 30% en masse de téflon,

par rapport à la masse totale du matériau composite.

Selon un mode de réalisation particulier, un matériau composite de l'invention consiste en :

- 5% en masse d'au moins un carbonate d'alcalino-terreux et/ou au moins un carbonate de terres rares par rapport à la masse totale du matériau composite ;
- 75% en masse de particules de bronze ; et
- 20% en masse de téflon,

par rapport à la masse totale du matériau composite.

Selon un mode de réalisation particulier, un matériau composite de l'invention consiste en :

- 7% en masse d'au moins un carbonate d'alcalino-terreux et/ou au moins un carbonate de terres rares par rapport à la masse totale du matériau composite ;
- 63% en masse de particules de bronze ; et
- 30% en masse de téflon,

par rapport à la masse totale du matériau composite.

Selon un mode de réalisation particulier, un matériau composite de l'invention consiste en :

- 7% en masse d'au moins un carbonate d'alcalino-terreux et/ou au moins un carbonate de terres rares par rapport à la masse totale du matériau composite ;
- 73% en masse de particules de bronze ; et
- 20% en masse de téflon,

par rapport à la masse totale du matériau composite.

Selon un mode de réalisation particulier, un matériau composite de l'invention consiste en :

- 10% en masse d'au moins un carbonate d'alcalino-terreux et/ou au moins un carbonate de terres rares par rapport à la masse totale du matériau composite ;
- 60% en masse de particules de bronze ; et
- 30% en masse de téflon,

par rapport à la masse totale du matériau composite.

Selon un mode de réalisation particulier, un matériau composite de l'invention consiste en :

- 10% en masse d'au moins un carbonate d'alcalino-terreux et/ou au moins un carbonate de terres rares par rapport à la masse totale du matériau composite ;
- 70% en masse de particules de bronze ; et
- 20% en masse de téflon,

par rapport à la masse totale du matériau composite.

Procédé de préparation

Un matériau composite selon l'invention est préparé à l'aide d'un procédé de fabrication comportant les étapes suivantes :

a) disposer d'un mélange :

- de particules de bronze,
- de téflon, et
- d'au moins un carbonate d'alcalino-terreux et/ou au moins un carbonate de terres rares ; et

b) imposer audit mélange une pression supérieure ou égale à 100 MPa de manière à former ledit matériau composite.

A titre illustratif, la mise sous pression d'un mélange selon l'étape a) dudit procédé peut être réalisée à l'aide d'une presse, notamment d'une presse uniaxe.

Par ailleurs, à titre illustratif également, la mise sous température d'un mélange selon l'étape a) dudit procédé peut être réalisée par l'utilisation d'un récipient chauffant, en particulier d'un moule chauffant.

Selon un mode de réalisation, l'étape b) d'un procédé de fabrication selon l'invention est réalisée au sein d'un moule propice à l'obtention du matériau composite sous la forme d'un article moulé notamment tel que défini ci-après.

Selon un mode de réalisation, la pression mise en oeuvre à l'étape b) d'un procédé selon l'invention est comprise entre 100 MPa et 60000 MPa, en particulier entre 100 MPa et 10000 MPa, notamment entre 100 MPa et 5000 MPa, de préférence entre 150 MPa et 1000 MPa, et est plus préférentiellement de 200 MPa.

Selon un mode de réalisation, l'étape b) est mise en oeuvre à une température comprise entre 15°C et 40°C, en particulier entre 20°C et 35°C, et de préférence de 25°C. Au sens de l'invention, on entend par température ambiante une température de 25°C.

Selon un autre mode de réalisation, l'étape b) est mise en oeuvre à une température comprise entre 100°C et 300°C, en particulier entre 100°C et 200°C, et est de préférence de 150°C.

Selon un mode de réalisation préféré, la température mise en oeuvre à l'étape b) est de 150°C et la pression mise en oeuvre à cette étape est de 200 MPa.

Selon un mode de réalisation, l'étape b) est réalisée pendant une durée comprise entre 1 et 10 minutes, en particulier entre 1 et 5 minutes, et de préférence de 2 minutes. En particulier, l'étape b) peut être réalisée pendant une durée continue comprise entre 1 et 10 minutes, en particulier entre 1 et 5 minutes, et de préférence de 2 minutes.

Selon un mode de réalisation préféré, la température mise en oeuvre à l'étape b) est de 150°C, la pression mise en oeuvre à cette étape est de 200 MPa, et l'étape est réalisée en continue pendant 2 minutes.

Le mélange de l'étape a) d'un procédé selon l'invention peut être réalisé directement dans l'enceinte et notamment le moule ou être préalablement formé à la mise en oeuvre du procédé.

Article moulé selon l'invention

Comme indiqué précédemment, un matériau composite selon l'invention peut se présenter sous la forme d'un article moulé.

Par « article moulé » ou « produit », on entend au sens de l'invention un objet de forme tridimensionnelle (par opposition, par exemple, à un revêtement) qui peut être sous sa forme finale, c'est-à-dire sous une forme qui permet sa mise en oeuvre directe, ou sous une « préforme » qui doit être découpée ou usinée sous une forme finale.

Par « mise en oeuvre directe » d'un article moulé selon l'invention, on entend aussi bien son utilisation que son installation dans un outil selon l'invention.

Un article moulé selon l'invention se présentant sous la forme d'une « préforme » telle que décrite ci-dessus peut être découpée ou usinée en un seul ou en plusieurs article(s) moulé(s) selon l'invention sous une forme finale. Dans le cas où plusieurs articles moulés selon l'invention, sous une forme finale, sont obtenus après découpage ou usinage d'un article moulé de l'invention, la forme finale desdits articles moulés peut être indépendamment identique ou différente.

Ainsi, la présente invention concerne également un article moulé ou encore produit dédié à être mis en contact avec des objets à haute température, notamment avec des objets ayant une température supérieure ou égale à 250°C, caractérisé en ce qu'il est formé, en tout ou partie, et de préférence est constitué, d'un matériau composite selon l'invention.

Selon un mode de réalisation préféré, un article moulé selon l'invention est formé à plus de 90% en masse, notamment à plus de 95% en masse, en particulier à plus de 98% en masse, plus particulièrement à plus de 99% en masse, voire est constitué, i.e. est uniquement composé, d'un matériau composite conforme à l'invention.

Un article moulé ou produit selon l'invention peut être de forme et de taille variées.

Selon un mode de réalisation, un article moulé selon l'invention est un insert, notamment un insert dédié à être présent dans une pince, tel qu'illustré en Figure 1.

Selon un autre mode de réalisation, un article moulé selon l'invention est un mors, en particulier le mors d'une pince.

Par ailleurs, la présente invention vise également un outil pour la préhension ou la manutention d'un objet, en particulier d'un objet en verre, ayant une température supérieure ou égale à 250°C, ledit outil comportant au moins un mors de préhension, ledit mors de préhension :

(i) étant constitué d'un matériau composite selon l'invention ; ou
(ii) comportant au moins un article moulé selon l'invention, ledit au moins un article moulé étant disposé dans l'outil de sorte à entrer en contact avec l'objet lors de la préhension dudit objet.

Selon un mode de réalisation, l'outil selon l'invention comprend au moins deux mors de préhension, chacun de ces deux mors, indépendamment l'un de l'autre :

(i) étant constitué d'un matériau composite selon l'invention ; ou
(ii) comportant au moins un article moulé selon l'invention, ledit au moins un article moulé étant disposé dans l'outil de sorte à entrer en contact avec l'objet lors de la préhension dudit objet.

Selon un mode de réalisation préféré, lorsque qu'un outil selon l'invention comporte au moins un article moulé selon l'invention, ledit au moins un produit est disposé dans l'outil de sorte à ce que seul ledit au moins un article moulé entre en contact avec l'objet lors de la préhension dudit objet.

Selon un mode de réalisation, un mors d'un outil selon l'invention est constitué d'un matériau composite selon l'invention.

Selon un autre mode de réalisation, le mors d'un outil selon l'invention comprend un, deux, trois, quatre, cinq ou plus article(s) moulé(s) selon l'invention.

Lorsque le mors d'un outil selon l'invention comprend plus d'un article moulé selon l'invention, les articles moulés peuvent avoir des dimensions identiques ou différentes indépendamment les uns des autres.

Lorsque le mors d'un outil selon l'invention comprend plus d'un article moulé selon l'invention, les articles moulés peuvent indépendamment être en contact les uns avec les autres ou être disposés séparément les uns des autres.

Selon un mode de réalisation préféré, lorsque le mors d'un outil selon l'invention comprend plus d'un article moulé selon l'invention, les articles moulés sont disposés de manière à tous être en contact avec l'objet lors de la préhension de l'objet.

Avantageusement, lorsque le mors d'un outil selon l'invention comprend plus d'un article moulé selon l'invention, lors de la préhension de l'objet par l'outil, l'objet rentre uniquement en contact avec les articles moulés.

Selon un mode de réalisation particulier, un outil selon l'invention est une pince, de préférence une pince comprenant au moins deux, en particulier seulement deux, mors tels que décrits ci-dessus.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

D'autres avantages et caractéristiques de l'invention ressortiront mieux à la lecture de la description détaillée d'exemples de mise en oeuvre de l'invention soumis à titre illustratif et non limitatif de l'invention et par référence à la figure 1.

La figure 1 est une vue en perspective d'un mors d'une pince selon l'invention destinée à la manutention d'un objet chaud comprenant à titre d'insert un produit selon l'invention.

## EXEMPLES

Les inventeurs ont réalisé une mesure comparative d'émission de radicaux fluorés volatiles par différents matériaux composites conformes ou non-conformes à l'invention.

Pour cela, différents matériaux composites ont été préparés sous la forme de disques de 2 cm de diamètre et 0.5 cm d'épaisseur par pressage à température ambiante (25°C) après mélange des matières premières dans un mélangeur orbital pendant une heure.

Un premier matériau composite non-conforme à l'invention, et correspondant à un matériau composite habituellement employé par exemple dans les verreries industrielles, a été préparé en ce sens. Ce premier matériau composite non-conforme à l'invention est constitué de particules de bronze (commercialisées par la société Ecka granules sous le nom ECKA Bronze 90/10 WS) et de téflon (commercialisée par la société Goodfellow sous le nom poudre de Polytétrafluoroéthylène FP306010 ou FP306020, dans un rapport massique 80/20.

Des matériaux composites conformes à l'invention ont également été préparés de la même façon, à partir d'un mélange de particules de bronze et de téflon en un rapport massique 80/20, dans lequel une partie du bronze a été remplacée par du carbonate de calcium (commercialisée par la société Mineral Technologies sous le nom PCC paper), conduisant ainsi à 4 différents matériaux composites conformes à l'invention et formés, respectivement :

(i) de 2% en masse de $CaCO_3$, de 20% en masse de Téflon et de 78% en masse de particules de bronze, par rapport à la masse totale du matériau composite ;
(ii) de 5% en masse de $CaCO_3$, de 20% en masse de Téflon et de 75% en masse de particules de bronze, par rapport à la masse totale du matériau composite ;
(iii) de 7% en masse de $CaCO_3$, de 20% en masse de Téflon et de 73% en masse de particules de bronze, par rapport à la masse totale du matériau composite ; ou
(iv) de 10% en masse de $CaCO_3$, de 20% en masse de Téflon et de 70% en masse de particules de bronze, par rapport à la masse totale du matériau composite.

Les cinq matériaux composites ainsi obtenus (ci-après appelés échantillons) (4 conformes à l'invention et un non-conforme) ont été mis à 2,5 cm de la focale d'une lampe à infrarouge, cette distance correspondant à une température de 500°C. Le test, et par conséquent l'exposition des échantillons testés à cette température constante, a duré 1 heure.

Les échantillons sont surmontés d'une grille d'alumine qui sert de support à un fritté d'inox rempli de $Ca(OH)_2$ ou de $CaCO_3$ (20g).

Pour garantir l'isolation thermique de l'ensemble, une cloche isolante en aluminium a été utilisée, le toit de la cloche étant ouvert pour que les éventuels composés volatils puissent être aspirés vers le haut (par la dépression de la hotte ainsi formée).

Après 1 heure, l'expérience est arrêtée et le matériau composite est laissé à refroidir.

Le $Ca(OH)_2$ ou $CaCO_3$ contenu dans le fritté d'inox est récupéré pour étudier la quantité de composés fluorés volatils éventuellement capturés et par conséquent produits par la dégradation thermique du téflon dans les différents matériaux composites.

Le $Ca(OH)_2$ ou le $CaCO_3$ sont ajoutés à 75 ml d'une solution aqueuse d'HCl (1M), puis le mélange ainsi obtenu est centrifugé à 5000 tour/min pendant 7 minutes.

La poudre résiduelle obtenue à l'issue de la centrifugation est séchée et analysée par diffraction des rayons X.

Les résultats obtenus pour chaque échantillon testé sont représentés dans le tableau suivant :

| Echantillon (Matériau composite) testé | Nature et masse des éléments récupérés |
|---|---|
| Contrôle positif matériau composite non-conforme à l'invention (constitué de 80% de bronze et de 20% de téflon en masse) | 0,8g de $CaF_2$, CaOF, d'espèces hydratées CaOf, xH2O ou CaOHF et d'un composé noir qui montre au raman une signature C-F. |

(suite)

| Echantillon (Matériau composite) testé | Nature et masse des éléments récupérés |
|---|---|
| Matériau composite selon l'invention comprenant 2% en masse de CaCO3 (décrit ci-dessus) | 0,3g de $CaF_2$, CaOF, d'espèces hydratées CaOf, xH2O ou CaOHF et d'un composé noir qui montre au raman une signature C-F. |
| Matériau composite selon l'invention comprenant 5% en masse de CaCO3 (décrit ci-dessus) | Quelques traces de $CaF_2$ |
| Matériau composite selon l'invention comprenant 7% en masse de CaCO3 (décrit ci-dessus) | Absence de composé fluoré |
| Matériau composite selon l'invention comprenant 10% en masse de CaCO3 (décrit ci-dessus) | Absence de composé fluoré |

On observe ainsi une diminution importante (diminution supérieure à 50% par rapport au contrôle positif) de la quantité de composés fluorés volatiles toxiques dès 2% en masse de $CaCO_3$, et plus particulièrement une absence totale de tels composés volatiles toxiques émis dès 7% en masse de $CaCO_3$ dans le matériau composite conforme à l'invention.

Par ailleurs, à l'issue de cette expérience, le matériau composite conforme à l'invention comprenant 7% en masse de $CaCO_3$ a été attaqué à l'eau régale pour dégrader le bronze : du $CaF_2$ a ainsi été récupéré, ce qui démontre que le $CaCO_3$ présent dans le matériau composite a suffi à piéger tous les produits volatils issus de la dégradation du téflon.

Le protocole présenté ci-dessus pour évaluer la capacité de piégeage de produits volatiles fluorés par les matériaux composites conformes à l'invention est beaucoup plus stricte que l'usage réel qui est fait de ce matériau composite, dans la mesure où celui-ci bénéficie d'un temps de repos, et donc de refroidissement, entre chaque prise d'une pièce en verre chaud.

## Revendications

1.  Matériau composite adapté pour une mise en contact avec un ou des objet(s) ayant une température supérieure ou égale à 250°C, notamment à des fins de préhension et/ou façonnage, **caractérisé en ce qu'**il est formé à partir :

    (i) de particules de bronze,
    (ii) de Téflon®, et
    (iii) d'au moins un carbonate d'alcalino-terreux et/ou au moins un carbonate de terres rares,

    ledit matériau composite comprenant une teneur en particules de bronze d'au moins 60 % en masse par rapport à la masse totale du matériau composite.

2.  Matériau composite selon la revendication 1, dans lequel le carbonate d'alcalino-terreux est choisi dans le groupe constitué de $BeCO_3$, $MgCO_3$, $CaCO_3$, $SrCO_3$, $BaCO_3$, $RaCO_3$ et leurs mélanges, en particulier dans le groupe constitué de $CaCO_3$, $SrCO_3$, $BaCO_3$ et leurs mélanges, et est de préférence $CaCO_3$.

3.  Matériau composite selon la revendication 1 ou 2, dans lequel le carbonate de terres rares est choisi dans le groupe constitué de $ScCO_3$, $YCO_3$, $LaCO_3$, $CeCO_3$, $PrCO_3$, $NdCO_3$, $PmCO_3$, $SmCO_3$, $EuCO_3$, $GdCO_3$, $TbCO_3$, $DyCO_3$, $HoCO_3$, $ErCO_3$, $TmCO_3$, $YbCO_3$, $LuCO_3$ et leurs mélanges, et est de préférence $LaCO_3$ ou $CeCO_3$.

4.  Matériau composite selon l'une quelconque des revendications 1 à 3, dans lequel le ratio massique particules de bronze/Téflon® est compris entre 60/30 et 80/20.

5.  Matériau composite selon l'une quelconque des revendications 1 à 4, comprenant une teneur en particules de bronze comprise entre 60% et 80% en masse, par rapport à la masse totale du matériau composite.

6.  Matériau composite selon l'une quelconque des revendications 1 à 5, comprenant une teneur en Téflon® d'au moins 20% en masse, et de préférence comprise entre 20% et 40% en masse, par rapport à la masse totale du matériau composite.

**7.** Matériau composite selon l'une quelconque des revendications 1 à 6, comprenant une teneur totale en carbonate d'alcalino-terreux et/ou carbonate de terres rares d'au moins 1% en masse, en particulier comprise entre 1% et 10% en masse, plus particulièrement comprise entre 5% et 10% en masse, de préférence comprise entre 7% et 10% en masse, plus préférentiellement de 7% en masse, par rapport à la masse totale du matériau composite.

**8.** Matériau composite selon l'une quelconque des revendications 1 à 7, **caractérisé en ce qu'**il est formé à plus de 90% en masse, notamment à plus de 95% en masse, en particulier à plus de 98% en masse, plus particulièrement à plus de 99% en masse, par rapport à la masse totale du matériau composite, voire est constitué :

   - de particules de bronze,
   - de Téflon®, et
   - d'au moins un carbonate d'alcalino-terreux et/ou au moins un carbonate de terres rares.

**9.** Matériau composite selon l'une quelconque des revendications 1 à 8, **caractérisé en ce qu'**il se présente sous la forme d'un article moulé.

**10.** Procédé de fabrication d'un matériau composite tel que défini dans l'une quelconque des revendications 1 à 9, comportant les étapes suivantes :

   a) disposer d'un mélange :

   - de particules de bronze,
   - de Téflon®, et
   - d'au moins un carbonate d'alcalino-terreux et/ou au moins un carbonate de terres rares ; et

   b) imposer audit mélange une pression supérieure ou égale à 100 MPa de manière à former ledit matériau composite.

**11.** Procédé selon la revendication 10, dans lequel ledit au moins un carbonate d'alcalino-terreux et/ou au moins un carbonate de terres rares est tel que défini en revendication 2 ou 3.

**12.** Procédé selon la revendication 10 ou 11, dans lequel la pression mise en oeuvre à l'étape b) est comprise entre 100 MPa et 60000 MPa, en particulier entre 100 MPa et 10000 MPa, notamment entre 100 MPa et 5000 MPa, de préférence entre 150 MPa et 1000 MPa, et est plus préférentiellement de 200 MPa.

**13.** Procédé selon l'une quelconque des revendications 10 à 12, dans lequel l'étape b) est mise en oeuvre à une température comprise entre 100°C et 300°C, en particulier entre 100°C et 200°C, et est de préférence de 150°C.

**14.** Procédé selon l'une quelconque des revendications 10 à 13, dans lequel l'étape b) est réalisée pendant une durée continue comprise entre 1 et 10 minutes, en particulier entre 1 et 5 minutes, et de préférence de 2 minutes.

**15.** Procédé selon l'une quelconque des revendications 10 à 14, dans lequel l'étape b) est réalisée au sein d'un moule propice à l'obtention du matériau composite sous la forme d'un article moulé, en particulier d'un insert, notamment d'un insert dédié à une pince.

**16.** Article moulé **caractérisé en ce qu'**il est formé, en tout ou partie, d'un matériau composite tel que défini selon l'une quelconque des revendications 1 à 9.

**17.** Outil pour la préhension ou la manutention d'un objet, en particulier d'un objet en verre, ayant une température supérieure ou égale à 250°C, ledit outil comportant au moins un mors de préhension, ledit mors de préhension :

   (i) étant constitué d'un matériau composite tel que défini dans l'une quelconque des revendications 1 à 9 ; ou
   (ii) comportant au moins un article moulé tel que défini en revendication 16, ledit au moins un article moulé étant disposé dans l'outil de sorte à entrer en contact avec l'objet lors de la préhension dudit objet.

Europäisches
Patentamt

European
Patent Office

Office européen
des brevets

**RAPPORT DE RECHERCHE EUROPEENNE**

Numéro de la demande

EP 18 20 9622

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2001 271083 A (NTN TOYO BEARING CO LTD) 2 octobre 2001 (2001-10-02) * le document en entier * * exemples 1-10; tableau 1 * ----- | 1-17 | INV. C22C32/00 C22C9/02 B22F1/00 C03B35/00 C22C1/04 |
| X | US 2003/162027 A1 (ARAKI TAKAYUKI [JP] ET AL) 28 août 2003 (2003-08-28) * le document en entier * * exemples 33, 37 * ----- | 1-17 | |
| A | CN 103 282 700 A (ALSTOM TECHNOLOGY LTD) 4 septembre 2013 (2013-09-04) * le document en entier * * revendication 6; exemple 1 * ----- | 1-17 | |

| DOMAINES TECHNIQUES RECHERCHES (IPC) |
|---|
| C22C B22F C03B |

Le présent rapport a été établi pour toutes les revendications

| Lieu de la recherche | Date d'achèvement de la recherche | Examinateur |
|---|---|---|
| Munich | 4 février 2019 | von Zitzewitz, A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

                                             
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 18 20 9622

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2019

| Document brevet cité au rapport de recherche | | Date de publication | Membre(s) de la famille de brevet(s) | | Date de publication |
|---|---|---|---|---|---|
| JP 2001271083 | A | 02-10-2001 | AUCUN | | |
| US 2003162027 | A1 | 28-08-2003 | JP | 3822914 B2 | 20-09-2006 |
| | | | US | 2003162027 A1 | 28-08-2003 |
| | | | WO | 9851495 A1 | 19-11-1998 |
| CN 103282700 | A | 04-09-2013 | CN | 103282700 A | 04-09-2013 |
| | | | EP | 2655939 A1 | 30-10-2013 |
| | | | FR | 2969811 A1 | 29-06-2012 |
| | | | WO | 2012085145 A1 | 28-06-2012 |

EPO FORM P0460

Pour tout renseignement concernant cette annexe : voir Journal Officiel de l'Office européen des brevets, No.12/82